# EUROPÄISCHE PATENTANMELDUNG

(11) **EP 4 012 633 A1**
(43) Veröffentlichungstag der Anmeldung: **15.06.2022**
(21) Anmeldenummer: 21199784.6
(22) Anmeldetag: 29.09.2021
(51) Int. Cl.: G06Q 10/06, G06Q 50/02

(54) **VERFAHREN ZUR ERSTELLUNG VON LANDWIRTSCHAFTLICHEN MASCHINENVERBÜNDEN**

(30) Priorität: 11.12.2020 DE 102020133170
(71) Anmelder: CLAAS E-Systems GmbH, 49201 Dissen (DE)
(72) Erfinder: Uhlemann, Mathias, 49326 Melle (DE); Autermann, Ludger, 48317 Drensteinfurt (DE); Middendorf, Heiko, 33790 Halle (DE)
(74) Vertreter: CLAAS Gruppe

(57) **Zusammenfassung**

System zur Auftragsverwaltung von landwirtschaftlichen Arbeitsmaschinen, wobei das System eine Vielzahl landwirtschaftlicher Arbeitsmaschinen mit jeweils einer Recheneinheit und einen von den Arbeitsmaschinen entfernten Server umfasst,
wobei die Recheneinheiten und der Server jeweils kommunikativ verbunden sind, wobei auf dem Server zumindest ein landwirtschaftlicher Arbeitsauftrag und zu dem Arbeitsauftrag gehörende Auftragsdaten vorhanden sind,
wobei die Recheneinheiten dazu vorgesehen und eingerichtet sind dem Server Basisdaten der jeweiligen Arbeitsmaschine zu übermitteln,
wobei der Server dazu vorgesehen und eingerichtet ist der jeweiligen Recheneinheit basierend auf den Basisdaten zumindest einen Teil der Auftragsdaten des Arbeitsauftrags zu übermitteln.

## Beschreibung

Die Erfindung betrifft ein System und ein Verfahren zur Auftragsverwaltung von landwirtschaftlichen Arbeitsmaschinen.

Aus der EP3651090A1 ist ein System zur Auftragsverwaltung von landwirtschaftlichen Arbeitsmaschinen bekannt.

Aufgabe der Erfindung ist es ein solches System zu verbessern.

Die Aufgabe wird gelöst durch ein System zur Auftragsverwaltung von landwirtschaftlichen Arbeitsmaschinen, wobei das System eine Vielzahl landwirtschaftlicher Arbeitsmaschinen mit jeweils einer Recheneinheit und einen von den Arbeitsmaschinen entfernten Server umfasst, wobei die Recheneinheiten und der Server jeweils kommunikativ verbunden sind, wobei auf dem Server zumindest ein landwirtschaftlicher Arbeitsauftrag und zu dem Arbeitsauftrag gehörende Auftragsdaten vorhanden sind, wobei die Recheneinheiten dazu vorgesehen und eingerichtet sind dem Server Basisdaten der jeweiligen Arbeitsmaschine zu übermitteln, wobei der Server dazu vorgesehen und eingerichtet ist der jeweiligen Recheneinheit basierend auf den Basisdaten zumindest einen Teil der Auftragsdaten des Arbeitsauftrags zu übermitteln.

Weiterhin umfasst die Erfindung ein Verfahren zur Auftragsverwaltung von landwirtschaftlichen Arbeitsmaschinen, insbesondere mit einem oben beschriebenen System, wobei eine Vielzahl an landwirtschaftlichen Arbeitsmaschinen mit jeweils einer Recheneinheit und ein von den landwirtschaftlichen Arbeitsmaschinen entfernter Server kommunikativ verbunden sind, wobei in dem Server zumindest ein landwirtschaftlicher Arbeitsauftrag und zu dem Arbeitsauftrag gehörende Auftragsdaten vorhanden sind, wobei die Recheneinheiten dem Server Basisdaten der jeweiligen Arbeitsmaschine übermitteln, wobei der Server den Recheneinheiten basierend auf den Basisdaten zumindest einen Teil der Auftragsdaten des Arbeitsauftrags übermittelt.

Der Server verwaltet den landwirtschaftlichen Arbeitsauftrag, oder die landwirtschaftlichen Arbeitsaufträge, und übermittelt den Recheneinheiten der Arbeitsmaschinen die Auftragsdaten, die zu den jeweiligen Basisdaten der Arbeitsmaschinen passen. Die Erfindung ermöglicht so, dass jeder Arbeitsmaschine passende Auftragsdaten übermittelt werden. Dadurch kann eine effiziente Auftragsverwaltung und entsprechend eine effiziente Bearbeitung der Arbeitsaufträge erreicht werden.

In einer bevorzugten Ausgestaltung sind die landwirtschaftlichen Arbeitsmaschinen dazu vorgesehen und eingerichtet basierend auf den Auftragsdaten den zugehörigen landwirtschaftlichen Arbeitsauftrag zu bearbeiten und während der Bearbeitung Prozessdaten an den Server zu übermitteln. Folglich führen die Arbeitsmaschinen den Arbeitsauftrag gemäß den Auftragsdaten durch, wobei die Recheneinheiten während der Durchführung des Arbeitsauftrags dem Server Prozessdaten übermitteln. Durch die Übermittlung von Prozessdaten während der Durchführung des Arbeitsauftrages, ist dem Server der Stand der Bearbeitung jederzeit bekannt. Der Server kann diesen aktuellen Stand jederzeit dem Nutzer anzeigen und/oder bei der Verwaltung der Arbeitsaufträge berücksichtigen.

In einer bevorzugten Ausgestaltung sind auf dem Server eine Vielzahl an Arbeitsaufträgen und jeweils zu den Arbeitsaufträgen gehörende Auftragsdaten vorhanden, wobei der Server dazu vorgesehen und eingerichtet ist der jeweiligen Recheneinheit basierend auf den Basisdaten zumindest einen Teil der Auftragsdaten eines der Arbeitsaufträge zu übermitteln. Durch die Verwaltung von mehreren Aufträgen auf einem Server hat der Server mehr Auswahlmöglichkeiten bei der Zuteilung von Auftragsdaten an die Arbeitsmaschinen. Der Server kann dadurch die Auftragsdaten zielgerichteter an die Basisdaten der Arbeitsmaschinen auswählen. Weiterhin kann der Server den Stand der Bearbeitung der einzelnen Arbeitsaufträge bei der Verteilung der Arbeitsdaten anderer Arbeitsaufträge berücksichtigen.

In einer bevorzugten Ausgestaltung ist an zumindest eine der Arbeitsmaschinen ein Anbaugerät angebaut und die Basisdaten umfassen Informationen über das Anbaugerät. Insbesondere bei der Nutzung von Traktoren als Arbeitsmaschinen sind die mit dem Traktor durchführbaren Arbeiten stark vom genutzten Anbaugerät abhängig. Durch die Übermittlung von Informationen über das Anbaugerät in den Basisdaten an den Server, ist der Server in der Lage der Recheneinheit der Arbeitsmaschine Arbeitsdaten zu übermitteln, die mit dem am Traktor angebauten Anbaugerät durchgeführt werden können.

In einer bevorzugten Ausgestaltung umfassen die Basisdaten Informationen über einen Bediener zumindest einer der Arbeitsmaschinen. Unterschiedliche Bediener können unterschiedliche Berechtigungen und/oder Erfahrungen besitzen. Durch die Übermittlung von Informationen über den Bediener der Arbeitsmaschine n den Basisdaten an den Server, ist der Server in der Lage der Recheneinheit der Arbeitsmaschine Arbeitsdaten zu übermitteln, die von dem Bediener ausgeführt werden dürfen und bevorzugt solche Arbeitsdaten mit denen der Bediener Erfahrung hat.

In einer bevorzugten Ausgestaltung umfassen die Prozessdaten Informationen über eine bearbeitete landwirtschaftliche Fläche. Durch die Übermittlung von Prozessdaten Informationen über eine bearbeitete landwirtschaftliche Fläche in den Prozessdaten ist der Server über bearbeitete landwirtschaftliche Flächen informiert und kann die Auftragsdaten des landwirtschaftlichen Auftrags oder eines anderen landwirtschaftlichen Auftrags an die bearbeitete Fläche anpassen. Bspw. können Doppelbearbeitungen vermieden werden oder nachfolgende Aufträge können auf bereits bearbeiteten Flächen beginnen.

In einer bevorzugten Ausgestaltung umfassen die Auftragsdaten Informationen über eine zu bearbeitende landwirtschaftliche Fläche. Durch die Übermittlung von Informationen über eine zu bearbeitenden Fläche kann die Recheneinheit die auszuführende Arbeit besser planen.

In einer bevorzugten Ausgestaltung sind die Recheneinheiten dazu vorgesehen und eingerichtet die Prozessdaten in regelmäßigen Abständen, vorzugsweise in Echtzeit, an den Server zu übermitteln. Durch die regelmäßige Übermittlung der Prozessdaten wird sichergestellt, dass die Daten auf dem Server nur ein begrenztes Alter erreichen, bevor sie mit neuen Daten ergänzt und/oder überschrieben werden. Insbesondere bei einer Übermittlung der Prozessdaten in Echtzeit wird ein aktueller Datenstand auf dem Server erreicht.

In einer bevorzugten Ausgestaltung ist der Server dazu vorgesehen und eingerichtet basierend auf den Prozessdaten einen Restaufwand eines Arbeitsauftrags zu bestimmen und den Restaufwand an zumindest eine Recheneinheit zu übermitteln. Durch die Übermittlung des Restaufwandes kann die Recheneinheit dem Bediener den kompletten Restaufwand des Arbeitsauftrages zeigen und nicht nur die seiner übermittelten Auftragsdaten. Der Nutzer erhält so einen wesentlich besseren Überblick über den Stand der Abarbeitung des Arbeitsauftrags.

In einer bevorzugten Ausgestaltung ist der Server dazu vorgesehen und eingerichtet, wenn eine zusätzliche Recheneinheit Basisdaten an den Server übermittelt, basierend auf dem Restaufwand eines Arbeitsauftrages die Arbeitsdaten zu verändern und zumindest einen Teil der veränderten Arbeitsdaten an zumindest eine der Recheneinheiten zu übermitteln. Durch die Veränderung der Arbeitsdaten können die von den Arbeitsmaschinen durchzuführenden Aufgaben angepasst werden. Dies ist insbesondere nützlich, wenn eine zusätzliche Arbeitsmaschine mit einer Recheneinheit zur Bearbeitung eines Arbeitsauftrags eingesetzt wird. Die Arbeitsdaten des Arbeitsauftrags werden von dem Server basierend auf dem Restaufwand neu aufgeteilt und die veränderten Arbeitsdaten der bereits am Arbeitsauftrag arbeitenden Arbeitsmaschine und der zusätzlichen Arbeitsmaschine übermittelt.

In einer bevorzugten Ausgestaltung ist der Server dazu vorgesehen und eingerichtet basierend auf den Prozessdaten die Arbeitsdaten zu verändern und zumindest einen Teil der veränderten Arbeitsdaten an zumindest eine der Recheneinheiten zu übermitteln. Eine Veränderung der Arbeitsdaten basierend auf den Prozessdaten ist insbesondere nützlich, wenn die Bearbeitung eines Arbeitsauftrags durch die Arbeitsmaschinen schneller oder langsamer geschieht als vom Server erwartet. Auf diese Abweichung vom Plan kann der Server mit einer Veränderung der Arbeitsdaten reagieren.

In einer bevorzugten Ausgestaltung ist zumindest eine der Recheneinheiten ein Task Controller gemäß dem ISOBUS-Standard. Task Controller gemäß dem ISOBUS-Standard sind zur Verarbeitung von Arbeitsdaten besonders geeignet und daher als Recheneinheiten in einem erfindungsgemäßen System besonders geeignet.

In einer bevorzugten Ausgestaltung ist zumindest eine der Recheneinheiten dazu vorgesehen und eingerichtet die Arbeitsdaten einem Bediener der Arbeitsmaschine anzuzeigen. Durch die Anzeige der Arbeitsdaten ist der Bediener der Arbeitsmaschine in der Lage diese zu kontrollieren und die korrekte Arbeit der Arbeitsmaschine zu überwachen.

Die Erfindung wird nachstehend anhand eines Ausführungsbeispiels näher erläutert. Die Figuren zeigen in
- Fig. 1:: einen Server und mehrere Arbeitsmaschinen,
- Fig. 2:: einen Server und zwei Arbeitsmaschinen auf einer landwirtschaftlichen Fläche,

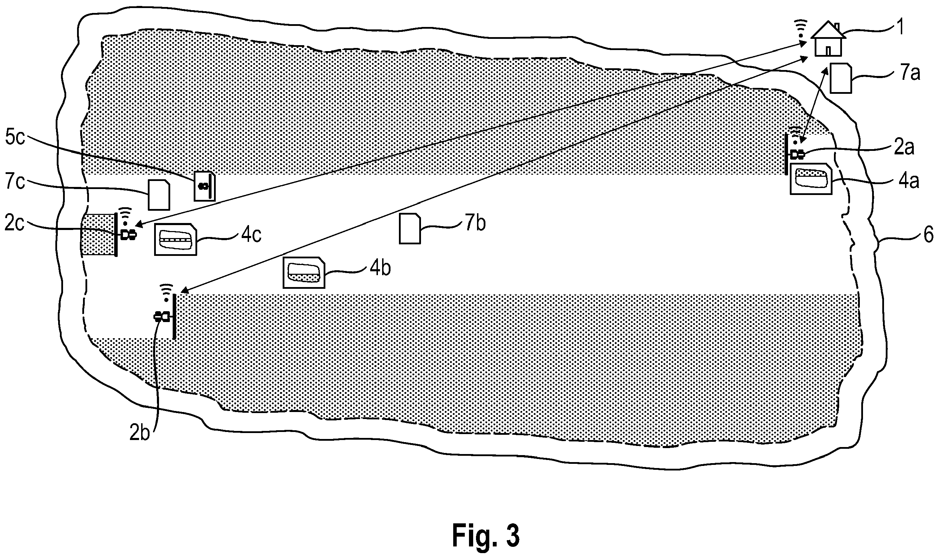

- Fig. 3:: einen Server und drei Arbeitsmaschinen auf einer landwirtschaftlichen Fläche.

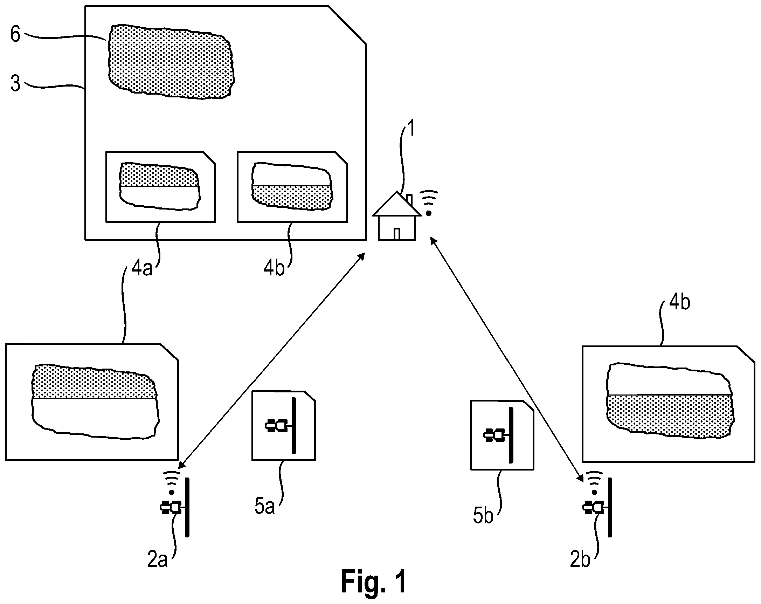

Figur 1 zeigt einen Server 1 und zwei landwirtschaftliche Arbeitsmaschinen 2a, 2b. Die Arbeitsmaschinen 2 sind jeweils mit einer Recheneinheit (nicht dargestellt) ausgestattet, wobei die Recheneinheiten kommunikativ mit dem Server 1 verbunden sind. In diesem Beispiel ist die kommunikative Verbindung eine Mobilfunkverbindung. Auf dem Server 1 befindet sich ein Arbeitsauftrag 3 und mehrere zu dem Arbeitsauftrag 3 gehörende Auftragsdaten 4a, 4b. Der Arbeitsauftrag 3 umfasst in diesem Beispiel die Bearbeitung einer landwirtschaftlichen Fläche 6. Die Auftragsdaten 4 definieren was auf welchem Teil der Fläche getan werden soll. Die Recheneinheiten übermitteln jeweils Basisdaten 5a, 5b an den Server. Die Basisdaten 5 umfassen in diesem Beispiel die Art der Arbeitsmaschine 2, den Bediener der Arbeitsmaschine und Informationen über ein an der Arbeitsmaschine angebautes Anbaugerät. Die Art der Arbeitsmaschinen sind in diesem Beispiel Traktoren. Die Anbaugeräte sind jeweils Spritzen zur Ausbringung von Pflanzenschutzmitteln. Der Server 1 weist den Arbeitsmaschinen 2 Auftragsdaten 4 zu und übermittelt die jeweiligen Auftragsdaten 4 an die jeweilige Recheneinheit der Arbeitsmaschinen 2. Die erste Arbeitsmaschine 2a erhält in diesem Beispiel die Auftragsdaten 4a zur Bearbeitung des nördlichen Teils der landwirtschaftlichen Fläche 6. Die zweite Arbeitsmaschine 2b erhält in diesem Beispiel die Auftragsdaten 4b zur Bearbeitung des südlichen Teils der landwirtschaftlichen Fläche 6.

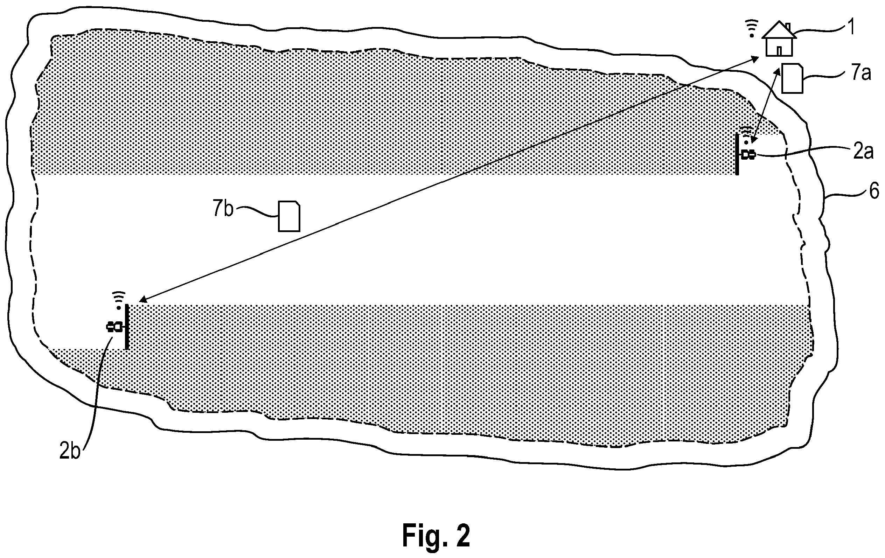

Figur 2 zeigt einen Server 1 und zwei Arbeitsmaschinen 2a, 2b auf einer landwirtschaftlichen Fläche 6. Die landwirtschaftliche Fläche 6 ist hier mit einem umlaufenden Vorgewende dargestellt. Die Arbeitsmaschinen 2 führen den Arbeitsauftrag 3 jeweils basierend auf den ihnen übermittelten Auftragsdaten 4 aus. Während der Ausführung übermitteln die Arbeitsmaschinen 2 dem Server 1 Prozessdaten7. Die Prozessdaten 7 umfassen unter anderem die jeweils bearbeitete Fläche. Zur Bestimmung der bearbeiteten Fläche sind die Arbeitsmaschinen 2 in diesem Beispiel mit einem Geolokalisationssystem, bspw. GPS, ausgestattet. Mittels des Geolokalisationssystems kann die Fahrspur der Arbeitsmaschine 2 bestimmt werden und in Kombination mit der bekannten Arbeitsbreite des Anbaugerätes kann die von der Arbeitsmaschine 2 bearbeitete Fläche bestimmt werden. Basierend auf den Prozessdaten7 bestimmt der Server den Restaufwand des Arbeitsauftrags 3. Dieser Restaufwand kann vom Server an die Recheneinheiten der Arbeitsmaschinen 2 übermittelt werden und von diesen den Benutzern dargestellt werden. Dadurch sind die Nutzer jederzeit nicht nur über die von ihnen bearbeitete Fläche und die ihnen zugewiesenen Auftragsdaten, sondern auch über den Restaufwand des Arbeitsauftrags informiert.

Figur 2 zeigt einen Server 1 und zwei Arbeitsmaschinen 2a, 2b auf einer landwirtschaftlichen Fläche 6. Die Recheneinheit der dritten Arbeitsmaschine 2c meldet sich neu beim Server 1 an und sendet zusätzliche Basisdaten 5c über die Art der Arbeitsmaschine 2c, den Bediener und ein Anbaugerät. Der Server 1 erstellt basierend auf den Basisdaten 5 der Arbeitsmaschinen und dem Restaufwand des Arbeitsauftrags 3 geänderte Auftragsdaten 4a, 4b, 4c und sendet die geänderten Auftragsdaten 4 an die jeweiligen Recheneinheiten der Arbeitsmaschinen 2. Die erste Arbeitsmaschine 2a erhält in diesem Beispiel die Auftragsdaten 4a zur Bearbeitung eines verkleinerten nördlichen Teils der landwirtschaftlichen Fläche 6. Die zweite Arbeitsmaschine 2b erhält in diesem Beispiel die Auftragsdaten 4b zur Bearbeitung eines verkleinerten südlichen Teils der landwirtschaftlichen Fläche 6. Die dritte Arbeitsmaschine 2c erhält in diesem Beispiel die Auftragsdaten 4c zur Bearbeitung eines Teils der landwirtschaftlichen Fläche 6 zwischen dem verkleinerten nördlichen und dem verkleinerten südlichen Teil.

### Bezugszeichenliste

- 1: Server
- 2: Arbeitsmaschine
- 3: Arbeitsauftrag
- 4: Auftragsdaten
- 5: Basisdaten
- 6: Landwirtschaftliche Fläche
- 7: Prozessdaten

## Patentansprüche

1. System zur Auftragsverwaltung von landwirtschaftlichen Arbeitsmaschinen (2), wobei das System eine Vielzahl landwirtschaftlicher Arbeitsmaschinen (2) mit jeweils einer Recheneinheit und einen von den Arbeitsmaschinen (2) entfernten Server (1)umfasst,
wobei die Recheneinheiten und der Server (1) jeweils kommunikativ verbunden sind,
wobei auf dem Server (1) zumindest ein landwirtschaftlicher Arbeitsauftrag (3) und zu dem Arbeitsauftrag(3) gehörende Auftragsdaten (4) vorhanden sind,
**dadurch gekennzeichnet, dass** die Recheneinheiten dazu vorgesehen und eingerichtet sind dem Server (1) Basisdaten (5) der jeweiligen Arbeitsmaschine (2) zu übermitteln,
wobei der Server (1) dazu vorgesehen und eingerichtet ist der jeweiligen Recheneinheit basierend auf den Basisdaten (5) zumindest einen Teil der Auftragsdaten (4) des Arbeitsauftrags (3) zu übermitteln.

2. System nach Anspruch 1,
**dadurch gekennzeichnet, dass** die landwirtschaftlichen Arbeitsmaschinen (2) dazu vorgesehen und eingerichtet sind basierend auf den Auftragsdaten (4) den zugehörigen landwirtschaftlichen Arbeitsauftrag (3) zu bearbeiten und während der Bearbeitung Prozessdaten (7) an den Server zu (1) übermitteln.

3. System nach einem der vorhergehenden Ansprüche,
**dadurch gekennzeichnet, dass** auf dem Server (1) eine Vielzahl an Arbeitsaufträgen (3) und jeweils zu den Arbeitsaufträgen (3) gehörende Auftragsdaten (4) vorhanden sind,
wobei der Server (1) dazu vorgesehen und eingerichtet ist der jeweiligen Recheneinheit basierend auf den Basisdaten (5) zumindest einen Teil der Auftragsdaten (4) eines der Arbeitsaufträge (3) zu übermitteln.

4. System nach einem der vorhergehenden Ansprüche,
**dadurch gekennzeichnet, dass** an zumindest eine der Arbeitsmaschinen (2) ein Anbaugerät angebaut ist und die Basisdaten (5) Informationen über das Anbaugerät umfassen.

5. System nach einem der vorhergehenden Ansprüche,
**dadurch gekennzeichnet, dass** die Basisdaten (5) Informationen über einen Bediener zumindest einer der Arbeitsmaschinen (2) umfassen.

6. System nach einem der vorhergehenden Ansprüche,
**dadurch gekennzeichnet, dass** die Prozessdaten (7) Informationen über eine bearbeitete landwirtschaftliche Fläche (6) umfassen.

7. System nach einem der vorhergehenden Ansprüche,
**dadurch gekennzeichnet, dass** die Auftragsdaten (4) Informationen über eine zu bearbeitende landwirtschaftliche Fläche (6) umfassen.

8. System nach einem der vorhergehenden Ansprüche,
**dadurch gekennzeichnet, dass** die Recheneinheiten dazu vorgesehen und eingerichtet sind die Prozessdaten (7) in regelmäßigen Abständen, vorzugsweise in Echtzeit, an den Server (1) zu übermitteln.

9. System nach einem der vorhergehenden Ansprüche,
**dadurch gekennzeichnet, dass** der Server (1) dazu vorgesehen und eingerichtet ist basierend auf den Prozessdaten (7) einen Restaufwand eines Arbeitsauftrags (3) zu bestimmen und den Restaufwand an zumindest eine Recheneinheit zu übermitteln.

10. System nach Anspruch 9,
**dadurch gekennzeichnet, dass** der Server (1) dazu vorgesehen und eingerichtet ist, wenn eine zusätzliche Recheneinheit Basisdaten (5) an den Server (1) übermittelt, basierend auf dem Restaufwand eines Arbeitsauftrages (3) die Auftragsdaten (4) zu verändern und zumindest einen Teil der veränderten Arbeitsdaten (4) an zumindest eine der Recheneinheiten zu übermitteln.

11. System nach einem der vorhergehenden Ansprüche,
**dadurch gekennzeichnet, dass** der Server (1) dazu vorgesehen und eingerichtet ist basierend auf den Prozessdaten (7) die Auftragsdaten (4)zu verändern und zumindest einen Teil der veränderten Auftragsdaten (4) an zumindest eine der Recheneinheiten zu übermitteln.

12. System nach einem der vorhergehenden Ansprüche,
**dadurch gekennzeichnet, dass** zumindest eine der Recheneinheiten ein Task Controller gemäß dem ISOBUS-Standard ist.

13. System nach einem der vorhergehenden Ansprüche,
**dadurch gekennzeichnet, dass** zumindest eine der Recheneinheiten dazu vorgesehen und eingerichtet ist die Auftragsdaten (4) einem Bediener der Arbeitsmaschine (2) anzuzeigen.

14. Verfahren zur Auftragsverwaltung von landwirtschaftlichen Arbeitsmaschinen (2), insbesondere mit einem System nach einem der vorhergehenden Ansprüche,
wobei eine Vielzahl an landwirtschaftlichen Arbeitsmaschinen (2) mit jeweils einer Recheneinheit und ein von den landwirtschaftlichen Arbeitsmaschinen (2) entfernter Server (1) kommunikativ verbunden sind,
wobei in dem Server (1) zumindest ein landwirtschaftlicher Arbeitsauftrag (3) und zu dem Arbeitsauftrag (3) gehörende Auftragsdaten (4) vorhanden sind,
**dadurch gekennzeichnet, dass** die Recheneinheiten dem Server (1) Basisdaten (5) der jeweiligen Arbeitsmaschine (2) übermitteln,
wobei der Server (1) den Recheneinheiten basierend auf den Basisdaten (5) zumindest einen Teil der Auftragsdaten (4) des Arbeitsauftrags (3) übermittelt.

15. Verfahren nach Anspruch 14,
**dadurch gekennzeichnet, dass** die Arbeitsmaschinen (2) den Arbeitsauftrag (3) gemäß den Auftragsdaten (4) durchführen,
wobei die Recheneinheiten während der Durchführung des Arbeitsauftrags (3) dem Server (1) Prozessdaten (7) übermitteln.

16. Verfahren nach einem der Ansprüche 14 oder 15,
**dadurch gekennzeichnet, dass** der Server (1) basierend auf den Prozessdaten (7) die Auftragsdaten (4) verändert und zumindest einen Teil der veränderten Auftragsdaten (4) an zumindest eine der Recheneinheiten übermittelt.
